# EUROPÄISCHE PATENTSCHRIFT

(11) **EP 3 564 064 B1**
(45) Veröffentlichungstag und Bekanntmachung des Hinweises auf die Patenterteilung: **30.11.2022**
(21) Anmeldenummer: 18170197.0
(22) Anmeldetag: 30.04.2018
(51) Int. Cl.: G06Q 50/06, H04Q 9/00, H02J 7/00, H02J 3/00, G06Q 50/30, B60L 53/14, B60L 53/30, B60L 53/65, B60L 53/66, B60L 53/68

(54) **LADESTATIONSSYSTEM**
CHARGING POINT SYSTEM
SYSTÈME DE STATION DE CHARGEMENT

(43) Veröffentlichungstag der Anmeldung: 06.11.2019
(73) Patentinhaber: Deutsche Telekom AG, 53113 Bonn (DE)
(72) Erfinder: Pfeuffer, Marco, 64839 Münster (DE)
(74) Vertreter: Nern, Peter-Michael

(56) Entgegenhaltungen:
- EP-A1- 2 455 924
- WO-A1-2013/062453
- WO-A2-2013/123988
- DE-A1-102010 009 583
- US-A1- 2014 354 228
- Anonymous: "SIM Cards: What is the difference between ICCID, IMSI and IMEI numbers? : ??? ???", , 22 May 2015 (2015-05-22), XP055681864, Retrieved from the Internet: URL:https://m.blog.naver.com/framkang/2203 63349346 [retrieved on 2020-04-01]

## Beschreibung

### TECHNISCHES GEBIET

Die Erfindung betrifft ein Ladestationssystem und ein Verfahren zur Bereitstellung elektrischer Energie für ein elektrisch betriebenes Fahrzeug.

### TECHNISCHER HINTERGRUND

Elektrisch betriebene Fahrzeuge nutzen elektrische Energie. Diese kann in elektrischen Speichern, wie Batterien oder Akkus, mitgeführt werden, um die Mobilität des elektrisch betriebenen Fahrzeugs hoch zu halten. Die Speicher haben ein begrenztes Fassungsvermögen für elektrische Energie und müssen aufgeladen werden, um die Reichweite des elektrisch betriebenen Fahrzeugs hoch zu halten.

Die Speicher können so dimensioniert sein, dass sie für einen Tag reichen und so in einer heimischen Garage aufgeladen werden können. Jedoch kommt es auch vor, dass die Kapazität des Speichers hierfür nicht ausreicht oder eine Strecke gefahren werden soll, deren Länge größer ist, als eine maximale Reichweite einer Speicherladung zulässt.

Hierfür können Ladestationen verwendet werden, die beispielsweise in einem öffentlichen Raum aufgestellt sind.

Sollen Ladestation von bestimmten Energieanbietern betrieben werden, so müssen die einzelnen Energieanbieter jeweils eigene Ladestationen bereitstellen, um ihre Kunden zu versorgen. Ladestationen sind jedoch teuer und eine große Anzahl verschiedener Ladestationen erfordert zudem städtebauliche Maßnahmen.

Aus der WO 2013/062453 A1 ist eine Lösung zum Laden eines von einer mobilen Einheit aufgenommenen Energiespeichers an einer auch durch andere mobile Einheiten nutzbaren Ladeeinrichtung bekannt geworden. Gemäß der in der Druckschrift beschriebenen Lösung werden sowohl durch die jeweilige mobile Einheit mit dem zu ladenden Energiespeicher als auch durch die von dieser jeweiligen mobilen Einheit für den Ladevorgang genutzte Ladeeinrichtung über ein Kommunikationsnetz je eine Identifizierungsinformation an einen Steuerungsserver übermittelt. Nach einer von einem Nutzer der zu ladenden mobilen Einheit getroffenen Auswahl eines Energieversorgers werden dann durch den Steuerungsserver der Ladevorgang zugelassen und, zum Zweck der Rechnungsstellung für die bei dem Ladevorgang bezogene elektrische Energie, die mobile Einheit und die Ladeeinrichtung auf der Basis der übermittelten Identifizierungsinformationen mit dem dafür ausgewählten Energieversorger in Bezug gesetzt. Demnach werden die Ladeeinrichtung und über diese die den Ladestrom beziehende mobile Einheit virtuell mit dem ausgewählten Energieversorger in Verbindung gebracht.

Die US 2014/0354228 A1 beschreibt die Verwendung einer kommunikativen Infrastruktur, welche eine Telematikeinheit eines Elektrofahrzeugs und einen Telematikdienstleister umfasst. Der Telematikdienstleister ist kommunikativ mit der Telematikeinheit verbunden, um die für einen Ladevorgang des Fahrzeugs reservierte Energiemenge auch im Hinblick auf die dafür genutzten Energiequellen zu steuern. Anhand einer für das Fahrzeug übermittelten Identifikation kann der Telematikdienstleister, beispielsweise aufgrund eines entsprechenden Datenbankeintrags, für den Ladevorgang zusammen mit einem bestimmten gesteuerten Ladeprogramm genutzte Einrichtungen mit dafür gemäß der Identifikation vorgesehenen Energiequellen verbinden.

### ZUSAMMENFASSUNG DER ERFINDUNG

Vor diesem Hintergrund stellt sich der vorliegenden Erfindung die Aufgabe, ein verbessertes Konzept zur Bereitstellung elektrischer Energie für ein elektrisch betriebenes Fahrzeug bereitzustellen.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt wird die Aufgabe durch ein Ladestationssystem zur Bereitstellung elektrischer Energie für ein elektrisch betriebenes Fahrzeug eines Nutzers in einem Smart Grid gelöst, das eine Mehrzahl von Energieanschlüssen aufweist, wobei jeder Energieanschluss einem unterschiedlichen Energieanbieter zugeordnet ist, wobei der Nutzer durch eine Teilnehmeridentität in einem Mobilfunknetzwerk identifizierbar ist. Das Ladestationssystem weist einen Server für die Auswahl eines Energieanschlusses zur Bereitstellung elektrischer Energie auf. Das Ladestationssystem weist des Weiteren eine Ladestation auf, die ausgebildet ist, elektrische Energie für das elektrisch betriebene Fahrzeug bereitzustellen. Die Ladestation ist mit der Mehrzahl der Energieanschlüsse elektrisch verbindbar und weist einen elektrischen Anschluss zum Bereitstellen der elektrischen Energie für das elektrisch betriebene Fahrzeug und eine Kommunikationsschnittstelle auf. Die Kommunikationsschnittstelle ist ausgebildet, die Teilnehmeridentität des Nutzers zu empfangen und die empfangene Teilnehmeridentität an den Server über das Mobilfunknetzwerk zu übertragen. Der Server ist ausgebildet, in Abhängigkeit von der übertragenen Teilnehmeridentität des Nutzers einen der Energieanschlüsse entsprechend einer hierfür durch den Nutzer zu seiner Teilnehmeridentität hinterlegten Auswahl auszuwählen und einen Verbindungspfad zwischen der Ladestation und dem ausgewählten Energieanschluss freizuschalten, um eine elektrische Verbindung über eine physische Leitung zwischen dem ausgewählten Energieanschluss und der Ladestation zur Bereitstellung der elektrischen Energie herzustellen.

Die Ladestation umfasst ein Teilnehmeridentitätsmodul mit einer weiteren Teilnehmeridentität der Ladestation, engl. subscriber identity module, d.h. eine SIM oder eine elektronische SIM, eSIM. Die weitere Teilnehmeridentität der Ladestation ist eine Mobilfunkteilnehmeridentifikation und umfasst eine International Mobile Subscriber Identity, kurz IMSI, oder eine elektronische Identität, elD. Durch das Teilnehmeridentitätsmodul mit der weiteren Teilnehmeridentität der Ladestation ist die Ladestation in dem Mobilfunknetzwerk identifizierbar und kann so von einer anderen Netzwerkentität erkannt und angesprochen werden.

Dabei ist die Kommunikationsschnittstelle der Ladestation dazu ausgebildet, die weitere Teilnehmeridentität der Ladestation an den Server zu übertragen, um die Ladestation gegenüber dem Server zu identifizieren.

Die Ladestation kann eine Ladesäule sein. Das Smart Grid kann ein intelligentes Stromnetz sein und elektrische Energie von unterschiedlichen Energieanbietern, insbesondere Energieerzeugern, führen.

Durch Freischalten einer elektrischen Verbindung zwischen dem ausgewählten Energieanschluss und der Ladestation kann der Server eine Zuweisung des Verbrauchs elektrischer Energie durch die Ladestation zu einem mit dem ausgewählten Energieanschluss assoziierten Energieanbieter herstellen.

Ein Energieanschluss umfasst eine physische elektrische Leitung, die von dem Smart Grid zu der Ladestation führt. Hierbei kann jeder Energieanschluss von einem Energieanbieter bereitgestellt werden.

Das Mobilfunknetzwerk kann ein LTE, ein 5G oder ein anderes Mobilfunknetzwerk sein. Das Mobilfunknetzwerk kann Netzwerkentitäten umfassen, die von einem Mobilfunknetzwerkbetreiber betrieben werden. Die Netzwerkentitäten können in dem Mobilfunknetzwerk betriebene Entitäten sein, beispielsweise eine Mobility Mangement Entity, MME, oder ein Serving Gateway, SGW. Der Server kann in so einer Netzwerkentität integriert sein, insbesondere in einer Basisstation des Mobilfunknetzwerks, oder so eine Netzwerkentität umfassen.

Die Kommunikationsschnittstelle empfängt eine Teilnehmeridentität eines Nutzers.

Beispielsweise kann die Kommunikationsschnittstelle die Teilnehmeridentität des Nutzers über das Mobilfunknetzwerk oder durch eine andere Übertragung erfassen. Die Teilnehmeridentität des Nutzers kann eine Mobilfunk- Teilnehmeridentität sein und eine International Mobile Subscriber Identity, kurz IMSI, oder eine elektronische Identität, eID, umfassen.

Die Kommunikationsschnittstelle umfasst eine Mobilfunkschnittstelle. Über diese Mobilfunkschnittstelle kann die Teilnehmeridentität des Nutzers an den Server übertragen werden. Die Übertragung erfolgt hierbei in das Mobilfunknetzwerk, wobei die Teilnehmeridentität des Nutzers dem Server bereitgestellt wird.

Die Ladestation weist einen Eingang auf. Der Eingang ist mit einem Energieversorgungsnetzwerk, insbesondere dem Smart Grid verbunden. Über den Eingang ist die Ladestation mit elektrischer Energie versorgbar.

Die Ladestation weist einen elektrischen Anschluss auf. Der elektrische Anschluss kann eine Buchse für einen Ladestecker eines Ladekabels zum Laden des elektrisch betriebenen Fahrzeugs umfassen. Über den elektrischen Anschluss kann die Ladestation das elektrisch betriebene Fahrzeug des Nutzers mit elektrischer Energie versorgen. Der Server kann durch das Herstellen der Verbindung zwischen dem ausgewählten Energieanschluss und der Ladestation, steuern, von welchem Energieanschluss die elektrische Energie zum Laden des elektrisch betriebenen Fahrzeugs bereitgestellt wird.

Ein Vorteil eines solchen Ladestationssystems ist es, dass ein Ladestationssystem bereitgestellt werden kann, das über einen Server in einem Mobilfunksystem gesteuert werden kann. Hierdurch können Ressourcen im Vergleich zu einem separaten Ladestationssystem gespart werden. Des Weiteren kann nutzerbezogen effizient und ergonomisch elektrische Energie für ein elektrisch betriebenes Fahrzeug bereitgestellt werden.

In einer Ausgestaltung umfasst die Kommunikationsschnittstelle wenigstens eine der folgenden Schnittstellen: NFC, Bluetooth, WLAN, 5G, LTE.

Die Teilnehmeridentität des Nutzers kann von der Ladestation beispielsweise über eine Nahfeldkommunikation, engl. near field communication, kurz NFC, über Bluetooth, eine weitere drahtlose Netzwerkverbindung wie WLAN oder aber auch über ein Mobilfunknetzwerk, wie 5G oder LTE, empfangen werden. Die Kommunikationsschnittstelle ist entsprechend hierfür ausgebildet.

Das Übertragen der weiteren Teilnehmeridentität der Ladestation kann zusammen mit dem Übertragen der Teilnehmeridentität des Nutzers erfolgen. Durch das Übertragen der weiteren Teilnehmeridentität der Ladestation ist der Standort der Ladestation dem Server bekannt, da die weitere Teilnehmeridentität der Ladestation jeder Ladestation von gegebenenfalls mehreren Ladestationen eindeutig zuordenbar ist.

Das Teilnehmeridentitätsmodul der Ladestation ist eine SIM oder eine eSIM. Hierdurch kann die Ladestation selbständig über die Mobilfunkschnittstelle in dem Mobilfunknetzwerk kommunizieren und ist direkt ansprechbar.

In einer Ausgestaltung umfasst die Teilnehmeridentität des Nutzers eine IMSI oder eID oder eSIM.

Die Teilnehmeridentität des Nutzers kann mit einem Endgerät des Nutzers verknüpft sein. Hierdurch ist der Nutzer mit dem Endgerät verknüpft, das unter der Teilnehmeridentität in dem Mobilfunknetzwerk registriert ist. Dies lässt eine eindeutige Zuordnung der Teilnehmeridentität des Nutzers zu, um beispielsweise eine Rechnung für den Energiekonsum an dem Infrastrukturelement auszustellen.

In einer Ausgestaltung ist die Kommunikationsschnittstelle der Ladestation ausgebildet, die Teilnehmeridentität des Nutzers von einem Mobiltelefon des Nutzers mittels einer Nahfeldkommunikation abzufragen, wenn erkannt wird, dass ein Stecker in den elektrischen Anschluss der Ladestation eingesteckt ist.

Durch den Stecker kann detektiert werden, dass elektrische Energie benötigt wird. Dies kann dazu verwendet werden, ein Abfragen der Teilnehmeridentität des Nutzers auszulösen. Hierbei verbindet sich die Kommunikationsschnittstelle mit einem Gerät des Nutzers, um die Teilnehmeridentität des Nutzers abzufragen.

In einer Ausgestaltung ist der elektrische Anschluss der Ladestation ausgebildet ist, einen Stecker gemäß EN 62196 Typ 2 aufzunehmen. Hierbei handelt es sich um einen Standard für Stecker, die zum Laden von Energiespeichern elektrisch betriebener Fahrzeuge dienen.

In einer Ausgestaltung weist die Ladestation eine Anzeigeeinrichtung auf, die dazu eingerichtet ist, ein Statussignal auszugeben, um einen Status der Ladestation anzuzeigen.

Bei der Anzeigeeinrichtung kann es sich um eine LED Anzeige handeln, um Lichtsignale auszugeben. Das Statussignal kann somit durch Aufleuchten einer optischen Anzeige, wie einer LED, dargestellt werden. Die Anzeigeeinrichtung kann auch eine akustische Anzeige umfassen, beispielsweise um eine erfolgreich hergestellte elektrische Verbindung zwischen dem elektrischen Anschluss und einem Stecker anzuzeigen.

In einer Ausgestaltung ist die Anzeigeeinrichtung ausgestaltet, das Statussignal auszugeben, wenn der Server die elektrische Verbindung zwischen dem ausgewählten Energieanschluss und der Ladestation hergestellt hat.

Das Statussignal kann je nach Situation unterschiedliche Status anzeigen. Dies kann eine Rückkopplung für den Nutzer darstellen und den technischen Ablauf der Kommunikation vereinfachen, da nicht der Eindruck erweckt wird, es wäre keine Verbindung zustande gekommen, was ein erneutes Anfragen durch den Nutzer verhindern kann.

In einer Ausgestaltung ist der Server ausgestaltet, ein Informationssignal auszusenden, wenn der Energieanschluss ausgewählt wurde, um anzuzeigen, welcher Energieanschluss ausgewählt wurde, wobei der Server ausgestaltet ist, vor dem Herstellen der Verbindung zwischen dem ausgewählten Energieanschluss und der Ladestation ein Bestätigungssignal zu empfangen, das die Auswahl bestätigt.

Das Bestätigungssignal kann von der Ladestation gesendet werden. Das Bestätigungssignal kann von einem Endgerät des Nutzers gesendet werden, insbesondere einem Smartphone. Hierbei kann das Bestätigungssignal über eine App des Betreibers des Servers gesendet werden, die auf dem Endgerät des Nutzers installiert ist. Das Bestätigungssignal kann die Auswahl des Servers durch den Nutzer bestätigen.

In einer Ausgestaltung umfasst das Mobilfunknetzwerk einen LTE-Standard oder einen 5G-Standard. Ein LTE-Standard kann eine schnelle Datenkommunikation ermöglichen. Ein 5G-Standard kann dazu eingerichtet sein, die Übertragung geringer Datenmengen von Geräten zu unterstützen.

Die Ladestation des Ladestationssystems zur Bereitstellung elektrischer Energie für ein elektrisch betriebenes Fahrzeug eines Nutzers in einem Smart Grid weist, wie bereits ausgeführt, eine Mehrzahl von Energieanschlüssen auf, wobei jeder Energieanschluss einem unterschiedlichen Energieanbieter zugeordnet ist. Der Nutzer ist durch eine Teilnehmeridentität in einem Mobilfunknetzwerk identifizierbar ist, wobei das Ladestationssystem einen Server für die Auswahl eines Energieanschlusses zur Bereitstellung elektrischer Energie umfasst. Die Ladestation ist mit der Mehrzahl der Energieanschlüsse elektrisch verbindbar ist und weist einen elektrischen Anschluss zum Bereitstellen der elektrischen Energie für das elektrisch betriebene Fahrzeug und eine Kommunikationsschnittstelle auf. Die Kommunikationsschnittstelle ist ausgebildet, die Teilnehmeridentität des Nutzers zu empfangen und die empfangene Teilnehmeridentität an den Server über das Mobilfunknetzwerk zu übertragen. Die Ladestation ist ausgebildet, elektrische Energie für das elektrisch betriebene Fahrzeug bereitzustellen, wenn der Server eine elektrische Verbindung zwischen dem ausgewählten Energieanschluss und der Ladestation zur Bereitstellung der elektrischen Energie hergestellt hat.

Mit einer derartigen Ladestation können unterschiedliche Wünsche nach verschiedenen Energieanbietern verschiedener Nutzer befriedigt werden, indem die Ladestation durch den Server entsprechend mit einem ausgewählten Energieanschluss verbunden wird. Hierdurch kann vermieden werden, dass für unterschiedliche Energieanbieter separate Ladestationen installiert werden müssen, was kosten spart und wodurch städtebauliche Maßnahmen vermieden werden können. Durch die Kommunikation mit dem Server, kann darüber hinaus auf ein separates Steuernetzwerk verzichtet werden.

In einer Ausgestaltung weist die Ladestation eine Anzeigeeinrichtung auf, insbesondere eine LED-Anzeige, um ein Statussignal der Ladestation und/oder ein Statussignal des Servers auszugeben.

Die Ladestation kann über die Kommunikationsschnittstelle und das Mobilfunknetzwerk mit dem Server verbunden sein. Der Server kann Statussignale an die Ladestation senden, die über die Ladestation ausgebbar sind. Statussignale der Ladestation, beispielsweise eine Bestätigung eines erfolgreichen Empfangs der Teilnehmeridentität des Nutzers, können ebenso über die Anzeigeeinrichtung ausgegeben werden.

Gemäß einem zweiten Aspekt wird die Aufgabe durch ein Verfahren zur Bereitstellung elektrischer Energie für ein elektrisch betriebenes Fahrzeug eines Nutzers über ein Ladestationssystem in einem Smart Grid gelöst, das eine Mehrzahl von Energieanschlüssen aufweist, wobei jeder Energieanschluss einem unterschiedlichen Energieanbieter zugeordnet ist. Der Nutzer ist durch eine Teilnehmeridentität in einem Mobilfunknetzwerk identifizierbar. Das Ladestationssystem weist einen Server für die Auswahl eines Energieanschlusses zur Bereitstellung elektrischer Energie und eine Ladestation auf, die ausgebildet ist, elektrische Energie für das elektrisch betriebene Fahrzeug bereitzustellen. Die Ladestation ist mit der Mehrzahl der Energieanschlüsse elektrisch verbindbar, wobei die Ladestation einen elektrischen Anschluss zum Bereitstellen der elektrischen Energie für das elektrisch betriebene Fahrzeug und eine Kommunikationsschnittstelle aufweist. Das Verfahren umfasst:
Empfangen der Teilnehmeridentität des Nutzers über die Kommunikationsschnittstelle der Ladestation;
Übertragen der empfangenen Teilnehmeridentität und einer weiteren Teilnehmeridentität eines Teilnehmeridentitätsmoduls der Ladestation an den Server über das Mobilfunknetzwerk durch die Kommunikationsschnittstelle;
Auswählen eines der Energieanschlüsse in Abhängigkeit von der übertragenen Teilnehmeridentität des Nutzers durch den Server, entsprechend einer hierfür durch den Nutzer zu seiner Teilnehmeridentität hinterlegten Auswahl eines dieser Energieanschlüsse (A, B, C);
Identifizieren der Ladestation durch die von ihr an den Server übertragene weitere Teilnehmeridentität des Teilnehmeridentitätsmoduls der Ladestation;
Freischalten eines Verbindungspfads zwischen der Ladestation und dem ausgewählten Energieanschluss durch den Server, um eine elektrische Verbindung über eine physische Leitung zwischen dem ausgewählten Energieanschluss und der Ladestation zur Bereitstellung der elektrischen Energie herzustellen.

Durch das beschriebene Verfahren können unterschiedliche Wünsche nach verschiedenen Energieanbietern verschiedener Nutzer befriedigt werden, indem die Ladestation durch den Server entsprechend mit einem ausgewählten Energieanschluss verbunden wird.

### KURZE BESCHREIBUNG DER FIGUREN

Weitere Ausführungsbeispiele werden Bezug nehmend auf die beiliegenden Zeichnungen erläutert. Es zeigen:
Fig. 1 eine schematische Darstellung einer Ladestation gemäß einem Ausführungsbeispiel;
Fig. 2 eine schematische Darstellung eines Ladestationssystems gemäß einem Ausführungsbeispiel;
Fig. 3 ein Ablaufdiagramm eines Verfahrens gemäß einem Ausführungsbeispiel.

### DETAILIERTE BESCHREIBUNG

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung, der durch die Ansprüche definiert ist, abzuweichen.

Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

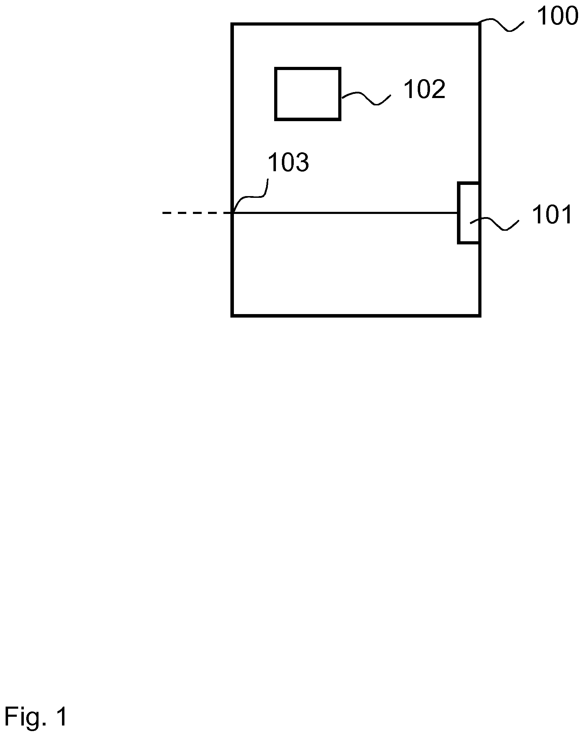

Fig. 1 zeigt eine schematische Darstellung einer Ladestation 100 gemäß einem Ausführungsbeispiel. Bei der Ladestation 100 handelt es sich um eine Ladesäule, die beispielsweise an einem Straßenrand einer öffentlichen Straße oder an einem Parkplatz angeordnet sein kann. In einem weiteren Ausführungsbeispiel handelt es sich um eine anders ausgestaltete Ladestation, wie eine in eine Wand integrierte Ladestation oder eine private Ladestation.

Die Ladestation 100 weist einen elektrischen Anschluss 101 auf. Der elektrische Anschluss 101 dient dazu, ein elektrisch betriebenes Fahrzeug an die Ladestation 100 anzuschließen. Hierfür weist der elektrische Anschluss 101 eine Buchse für einen Stecker auf, der der Norm EN 62196 Typ2 genügt. In einem weiteren Ausführungsbeispiel genügt der elektrische Anschluss 101 einer anderen oder mehreren Normen zum Anschließen von elektrischen Leitungen zum Laden eines elektrisch betriebenen Fahrzeugs. In den elektrischen Anschluss 101 kann ein Stecker eines Ladekabels eines elektrisch betriebenen Fahrzeugs eingesteckt werden. Somit kann eine elektrische Verbindung zwischen dem elektrisch betriebenen Fahrzeug und der Ladestation 100 hergestellt werden.

Die Ladestation 100 kann über den elektrischen Anschluss 101 elektrische Energie zum Laden des elektrisch betriebenen Fahrzeugs bereitstellen.

Die Ladestation 100 weist des Weiteren eine Kommunikationsschnittstelle 102 auf. Die Kommunikationsschnittstelle 102 umfasst eine Nahfeldkommunikationsschnittstelle die dazu dient, eine Nahfeldkommunikation zwischen der Ladestation 100 und einem mobilen Endgerät eines Nutzers (aus Gründen der Übersichtlichkeit nicht dargestellt) herzustellen, insbesondere über NFC. In weiteren Ausführungsbeispielen umfasst die Kommunikationsschnittstelle 102 zusätzlich oder alternativ eine Bluetoothschnittstelle weitere Schnittstellenarten.

Die Ladestation weist ein Teilnehmeridentitätsmodul mit einer Teilnehmeridentität der Ladestation 100 zum Identifizieren der Ladestation 100 in einem Mobilfunknetzwerk auf.

Die Kommunikationsschnittstelle 102 umfasst des Weiteren eine Mobilfunkschnittstelle. Die Mobilfunkschnittstelle ist ein Funkmodul zum Übertragen und Empfangen von Daten in bzw. aus dem Mobilfunknetzwerk, insbesondere einem 5G oder einem LTE Mobilfunknetzwerk. Hierfür ist die Mobilfunkschnittstelle dazu eingerichtet, über eine Basisstation mit einem Server, insbesondere einer Netzwerkentität des Mobilfunknetzwerkes, zu kommunizieren. In einem weiteren Ausführungsbeispiel sind die Kommunikationsschnittstelle 102 und die Mobilfunkschnittstelle getrennt, sodass die Mobilfunkschnittstelle separat in der Ladestation 100 angeordnet ist.

Die Kommunikationsschnittstelle 102 ist dazu eingerichtet, eine Teilnehmeridentität des Nutzers zu empfangen, insbesondere eine IMSI oder eine eID eines Endgeräts des Nutzers, insbesondere eines Smartphones, zu empfangen. Hierfür kann die Kommunikationsschnittstelle 102 eine Nahfeldkommunikation zu dem Endgerät aufbauen oder auf eine von dem Endgerät aufgebaute Nahfeldkommunikation eingehen. In einem weiteren Ausführungsbeispiel wird die Teilnehmeridentität des Nutzers über die Mobilfunkschnittstelle der Kommunikationsschnittstelle 102 empfangen.

Bei der Kommunikation über das Mobilfunknetzwerk verwendet die Ladestation 100 die Teilnehmeridentität der Ladestation 100 um sich gegenüber einer Basisstation des Mobilfunknetzwerks und weiteren Mobilfunknetzwerkteilnehmern zu identifizieren. So kann auch die Position der Ladestation 100 weiteren Mobilfunknetzwerkteilnehmern, wie dem Server, bekanntgemacht werden.

Die Ladestation 100 weist eine Anzeigeeinrichtung auf, die aus Gründen der Übersichtlichkeit in den Figuren nicht dargestellt ist. Sie kann eine LED Anzeige umfassen, durch die Status der Ladestation 100 angezeigt werden können. Beispielsweise zeigt ein grünes Licht, dass elektrische Energie bereitgestellt wird und ein rotes Licht, dass eine elektrische Verbindung unterbrochen wurde.

Die Ladestation 100 weist einen Eingang 103 auf, der dazu ausgebildet ist, elektrische Energie von einem Energieversorgungsnetzwerk, insbesondere einem intelligenten Stromnetzwerk, engl. Smart Grid, zu empfangen. Eine elektrische Leitung zu dem Energieversorgungsnetzwerk ist in Fig. 1 gestrichelt angedeutet.

Das Smart Grid weist eine Mehrzahl von Energieanschlüssen auf. jeweils ein Energieanschluss ist hierbei einem Energieanbieter zugeordnet. So können Verbraucher auf elektrische Energie unterschiedlicher Energieanbieter zugreifen, um beispielsweise Ökostrom oder besonders günstigen Strom oder regionalen Strom zu beziehen. Hierfür ist in dem Smart Grid jedem Energieanbieter ein separater Energieanschluss zugeordnet.

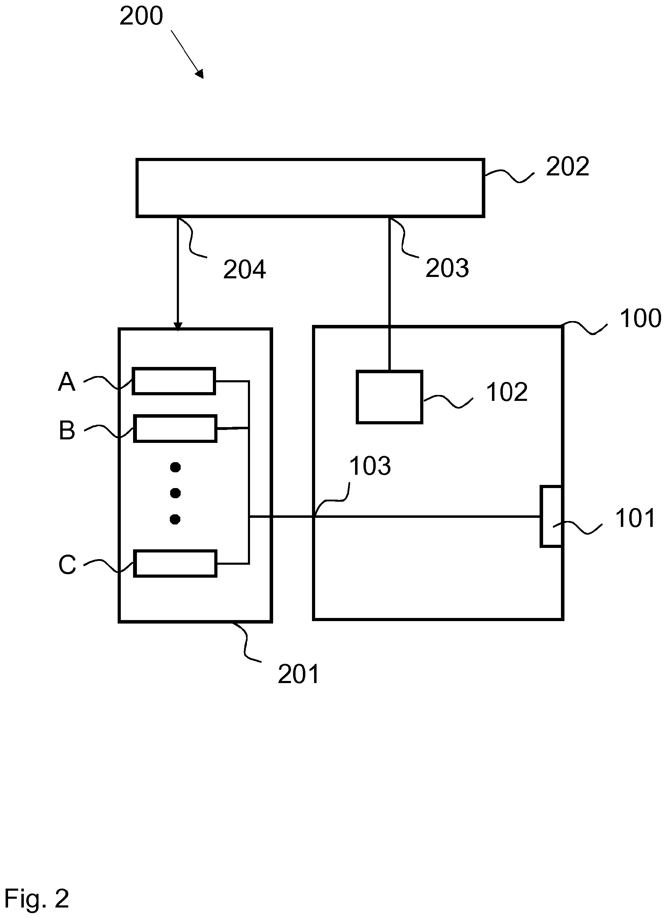

Fig. 2 zeigt ein Ladestationssystem 200 gemäß einem Ausführungsbeispiel. Das Ladestationssystem 200 umfasst die Ladestation 100, ein Smart Grid 201 und einen Server 202.

Das Smart Grid 201 umfasst verschiedene Energieanschlüsse A, B, C. Der Energieanschluss A ist einem ersten Energieanbieter zugeordnet, der Energieanschluss B ist einem zweiten Energieanbieter zugeordnet und der Energieanschluss C ist einem dritten Energieanbieter zugeordnet. Die Energieanbieter sind verschieden. So kann ein Verbraucher bei einer Wahl eines Energieanschlusses A, B, C einen der Energieanbieter wählen. Das Smart Grid 201 umfasst weitere Energieanschlüsse, die durch Punkte angedeutet sind. Ein Verbraucher, insbesondere ein Nutzer der Ladestation 100, kann somit zwischen einer Mehrzahl Energieanbieter wählen, indem er einen der Energieanschlüsse A, B, C wählt.

Das Smart Grid 201 ist elektrisch mit dem Eingang 103 der Ladestation 100 verbunden. Hierdurch ist die Ladestation 100 durch das Smart Grid 201 mit elektrischer Energie versorgbar. Insbesondere ist die Ladestation 100 von jedem der Energieanschlüsse A, B, C des Smart Grids 201 mit elektrischer Energie versorgbar.

Das Ladestationssystem 200 weist einen Server 202 auf. Der Server 202 ist mit dem Mobilfunknetzwerk verbunden und ist über eine Funkverbindung über das Mobilfunknetzwerk ansprechbar.

Die Ladestation 100 kann über die Mobilfunkschnittstelle 102 eine Verbindung zu dem Mobilfunknetzwerk herstellen und so mit dem Server 202 kommunizieren. Der Server 202 weist zur Kommunikation über das Mobilfunknetzwerk eine Mobilfunkschnittstelle 203 auf.

Umgekehrt kann der Server 202 anhand der Teilnehmeridentität der Ladestation 100 die Ladestation über die Mobilfunkschnittstelle 203 kontaktieren. In beide Kommunikationsrichtungen kann eine Mobilfunkverbindung zwischen dem Server 202 und der Ladestation 100 aufgebaut werden.

Der Server 202 weist eine Steuerschnittstelle 204 auf. Die Steuerschnittstelle 204 ist mit dem Smart Grid 201 verbunden und dazu eingerichtet, Steuersignale, d.h. Steuerbefehle, von dem Server 202 an das Smart Grid 201 zu übertragen. Die Steuersignale umfassen hierbei ein elektrisches Verbinden eines Energieanschlusses A, B, C mit dem Eingang 103 der Ladestation 100. Die elektrische Verbindung erfolgt hierbei mechanisch.

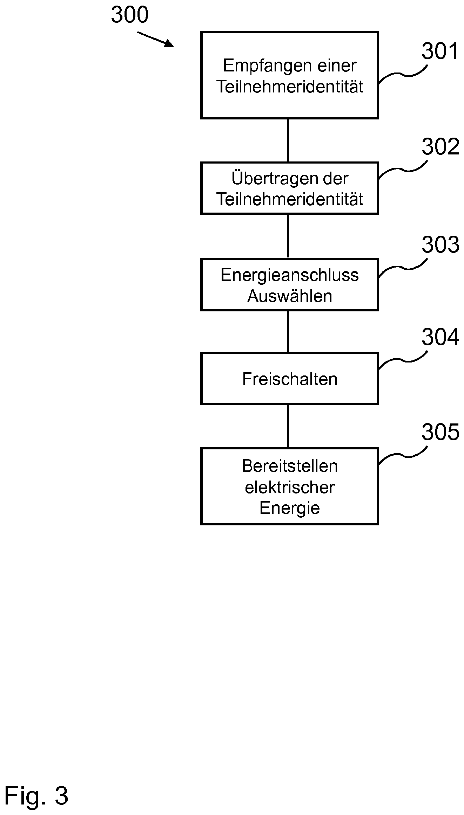

Fig. 3 zeigt ein Flussdiagramm 300 für ein Verfahren gemäß einem Ausführungsbeispiel. Das Verfahren dient zur Bereitstellung elektrischer Energie für ein elektrisch betriebenes Fahrzeug eines Nutzers über das Ladestationssystem 200 mit dem Smart Grid 201, das eine Mehrzahl von Energieanschlüssen A, B, C aufweist, wobei jeder Energieanschluss A, B, C einem unterschiedlichen Energieanbieter zugeordnet ist.

In einem Schritt 301 wird von der Kommunikationsschnittstelle 102 der Ladestation 100 eine Teilnehmeridentität eines Nutzers, insbesondere eine IMSI, empfangen. Hierfür detektiert der elektrische Anschluss 101 eine Aktivierung der Ladestation 100, insbesondere das Einstecken eines Steckers in den elektrischen Anschluss 101. Dies kann über ein Näherungssignal, engl. proximity detector signal, kurz: PP signal, erkannt werden, beispielsweise bei einem EN 62196 Typ2 Stecker. Die Ladestation 100 aktiviert dann die Kommunikationsschnittstelle 102, die automatisch nach Geräten in Funkreichweite sucht. Erkennt die Kommunikationsschnittstelle 102 ein Gerät, insbesondere ein mobiles Endgerät wie ein Smartphone, so verbindet sich die Kommunikationsschnittstelle 204 mit dem Gerät und empfängt von dem Gerät die Teilnehmeridentität des Geräts und somit die Teilnehmeridentität des Nutzers. Zum Herstellen der Verbindung ist eine Bestätigung eines Nutzers des Gerätes nötig. In einem weiteren Ausführungsbeispiel kann die Bestätigung entfallen.

In einem weiteren Ausführungsbeispiel wird die Kommunikationsschnittstelle 102 von dem Gerät kontaktiert, beispielsweise durch anwählen der Teilnehmeridentität der Ladestation 100, insbesondere einer mit einer SIM-Karte verknüpften Telefonnummer. Die Übertragung der Teilnehmeridentität des Nutzers wird hierbei von dem Gerät des Nutzers initiiert.

Das Übertragen der Teilnehmeridentität des Nutzers, bzw. das Einstecken des Steckers in den elektrischen Anschluss 101 signalisiert der Ladestation 100, dass ein Nutzer eine Bereitstellung elektrischer Energie zum Laden eines elektrisch betriebenen Fahrzeugs verlangt.

In einem Schritt 302, wird die in Schritt 301 empfangene Teilnehmeridentität des Nutzers zusammen mit der Teilnehmeridentität der Ladestation 100 über die Kommunikationsschnittstelle 102 an den Server 202 gesendet. Hierdurch ist zum einen der Nutzer von dem Server 202 identifizierbar, wenn dieser sich mit der Teilnehmeridentität des Nutzers zuvor registriert hat. Die Registrierung geht einer Nutzung der Ladesäule 100 voraus und kann mit dem Mobilfunkanbieter, der das Mobilfunknetzwerk bereitstellt vorgenommen werden.

Der Server 202 wählt in einem Schritt 303 auf Basis der übertragenen Teilnehmeridentität des Nutzers einen Energieanschluss A, B, C aus. Der Nutzer hat hierfür zu seiner Teilnehmeridentität des Nutzers einen Energieanschluss A, B, C ausgewählt und die Auswahl hinterlegt. Beispielsweise werden von dem Server 202 in einer Datenbank zu einer Vielzahl von Teilnehmeridentitäten verschiedener Nutzer jeweils ein Energieanschluss A, B, C gespeichert, der bei der Auswahl des Energieanschlusses A, B, C von dem Server ausgelesen wird.

In Schritt 304 überträgt der Server 202 über die Steuerschnittstelle 204 ein Steuersignal an das Smart Grid 201, das in dem Smart Grid 201 den ausgewählten Energieanschluss A, B, C auf den Eingang 103 der Ladestation 100 schaltet. Die Verbindung zwischen dem ausgewählten Energieanschluss A, B, C wird somit von dem Server 202 freigeschaltet.

In einem weiteren Ausführungsbeispiel Sendet der Server 202 vor dem Übertragen des Steuersignals eine Informationsnachricht an die Ladestation 100, die die Informationsnachricht über die Kommunikationsschnittstelle 102 an das Gerät des Nutzers weiterleitet. Der Nutzer kann dann sehen, welcher Energieanbieter von dem Server 202 durch Auswählen des Energieanschlusses A, B, C ausgewählt wurde. Der Nutzer kann diese Auswahl bestätigen oder verwerfen. Wird die Auswahl verworfen, so kann eine manuelle Auswahl eines Energieanbieters durch den Nutzer in einer App seines Geräts erfolgen, die dann über die Ladestation 100 an den Server 202 übertragen wird, der dann hieraufhin den entsprechenden Energieanschluss A, B, C auswählt.

Wird die Informationsnachricht bestätigt, so wird ohne weitere Auswahl das Steuersignal an das Smart Grid 201 gesendet. In einem weiteren Ausführungsbeispiel kommuniziert der Server 202 anhand der von der Ladestation 100 an den Server 202 übermittelten Teilnehmeridentität des Nutzers direkt über das Mobilfunknetzwerk, ohne die Ladestation 100 zum Weiterleiten der Informationsnachricht bzw. der Bestätigung auf die Informationsnachricht zu nutzen.

In Schritt 305 wird durch die Ladestation 100 die elektrische Energie an dem elektrischen Anschluss 101 bereitgestellt. Das mit der Ladestation 100 verbundene elektrisch betriebene Fahrzeug des Nutzers wird automatisch mit elektrischer Energie versorgt und so geladen.

### BEZUGSZEICHENLISTE

- 100: Ladestation
- 101: elektrischer Anschluss
- 102: Kommunikationsschnittstelle
- 103: Eingang
- 200: Ladestationssystem
- 201: Smart Grid
- 202: Server
- 203: Mobilfunkschnittstelle
- 204: Steuerschnittstelle
- 300: Flussdiagramm
- 301-305: Verfahrensschritt
- A, B, C: Energieanschluss

## Patentansprüche

1. Ladestationssystem (200) zur Bereitstellung elektrischer Energie für ein elektrisch betriebenes Fahrzeug eines Nutzers in einem Smart Grid (201), das eine Mehrzahl von Energieanschlüssen (A, B, C) aufweist, wobei jeder Energieanschluss (A, B, C) einem unterschiedlichen Energieanbieter zugeordnet ist, wobei der Nutzer durch eine Teilnehmeridentität in einem Mobilfunknetzwerk identifizierbar ist, mit:
einem Server (202) für die Auswahl eines Energieanschlusses (A, B, C) zur Bereitstellung elektrischer Energie,
einer Ladestation (100), die ausgebildet ist, elektrische Energie für das elektrisch betriebene Fahrzeug bereitzustellen und wobei die Ladestation (100) mit der Mehrzahl der Energieanschlüsse (A, B, C) elektrisch verbindbar ist, wobei die Ladestation (100) einen elektrischen Anschluss (101) zum Bereitstellen der elektrischen Energie für das elektrisch betriebene Fahrzeug aufweist und eine Kommunikationsschnittstelle (102), die dazu ausgebildet ist, die Teilnehmeridentität des Nutzers zu empfangen und die empfangene Teilnehmeridentität an den Server (202) über das Mobilfunknetzwerk zu übertragen,
und wobei der Server (202) ausgebildet ist, in Abhängigkeit von der übertragenen Teilnehmeridentität des Nutzers einen der Energieanschlüsse (A, B, C) entsprechend einer hierfür durch den Nutzer zu seiner Teilnehmeridentität hinterlegten Auswahl eines dieser Energieanschlüsse (A, B, C) auszuwählen und einen Verbindungspfad zwischen der Ladestation (100) und dem ausgewählten Energieanschluss (A, B, C) freizuschalten,
um eine elektrische Verbindung über eine physische Leitung zwischen dem ausgewählten Energieanschluss (A, B, C) und der Ladestation (100) zur Bereitstellung der elektrischen Energie herzustellen,
**dadurch gekennzeichnet, dass**
die Ladestation (100) ein Teilnehmeridentitätsmodul mit einer weiteren Teilnehmeridentität zur Identifikation der Ladestation (100) in dem Mobilfunknetzwerk umfasst; und
wobei das Teilnehmeridentitätsmodul der Ladestation (100) eine SIM oder eine eSIM umfasst; und
wobei die weitere Teilnehmeridentität der Ladestation (100) eine Mobilfunkteilnehmeridentifikation ist und eine International Mobile Subscriber Identity, kurz IMSI, oder eine elektronische Identität, eID, umfasst, wobei die weitere Teilnehmeridentität der Ladestation in dem Mobilfunknetzwerk identifizierbar ist und damit von einer anderen Netzwerkentität erkannt und angesprochen werden kann; und
wobei die Kommunikationsschnittstelle (102) der Ladestation (100) ausgebildet ist, die weitere Teilnehmeridentität der Ladestation (100) an den Server (202) zu übertragen, um die Ladestation (100) gegenüber dem Server (202) zu identifizieren; und
wobei durch das Übertragen der weiteren Teilnehmeridentität der Ladestation (100) der Standort der Ladestation (100) dem Server (202) bekannt ist.

2. Ladestationssystem (200) nach Anspruch 1, wobei die Kommunikationsschnittstelle (102) wenigstens eine der folgenden Schnittstellen umfasst: NFC, Bluetooth, WLAN, 5G, LTE.

3. Ladestationssystem (200) nach einem der vorhergehenden Ansprüche, wobei die Teilnehmeridentität des Nutzers eine IMSI oder eID oder eSIM umfasst.

4. Ladestationssystem (200) nach einem der vorhergehenden Ansprüche, wobei die Kommunikationsschnittstelle (102) der Ladestation (100) ausgebildet ist, die Teilnehmeridentität des Nutzers von einem Mobiltelefon des Nutzers mittels einer Nahfeldkommunikation abzufragen, wenn erkannt wird, dass ein Stecker in den elektrischen Anschluss (101) der Ladestation (100) eingesteckt ist.

5. Ladestationssystem (200) nach einem der vorhergehenden Ansprüche, wobei der elektrische Anschluss (101) der Ladestation (100) ausgebildet ist, einen Stecker gemäß EN 62196 Typ 2 aufzunehmen.

6. Ladestationssystem (200) nach einem der vorhergehenden Ansprüche, wobei die Ladestation (100) eine Anzeigeeinrichtung aufweist, die dazu eingerichtet ist, ein Statussignal auszugeben, um einen Status der Ladestation (100) anzuzeigen.

7. Ladestationssystem (200) nach Anspruch 6, wobei die Anzeigeeinrichtung ausgestaltet ist, das Statussignal auszugeben, wenn der Server (202) die elektrische Verbindung zwischen dem ausgewählten Energieanschluss (A, B, C) und der Ladestation (100) hergestellt hat.

8. Ladestationssystem (200) nach einem der vorhergehenden Ansprüche, wobei der Server (202) ausgestaltet ist, ein Informationssignal auszusenden, wenn der Energieanschluss (A, B, C) ausgewählt wurde, um anzuzeigen, welcher Energieanschluss (A, B, C) ausgewählt wurde, wobei der Server (202) ausgestaltet ist, vor dem Herstellen der Verbindung zwischen dem ausgewählten Energieanschluss (A, B, C) und der Ladestation (100) ein Bestätigungssignal zu empfangen, das die Auswahl bestätigt.

9. Ladestationssystem (200) nach einem der vorhergehenden Ansprüche, wobei das Mobilfunknetzwerk einen LTE-Standard oder einen 5G-Standard umfasst.

10. Verfahren zur Bereitstellung elektrischer Energie für ein elektrisch betriebenes Fahrzeug eines Nutzers über ein Ladestationssystem (200) mit einem Smart Grid (201), das eine Mehrzahl von Energieanschlüssen (A, B, C) aufweist, wobei jeder Energieanschluss (A, B, C) einem unterschiedlichen Energieanbieter zugeordnet ist, wobei der Nutzer durch eine Teilnehmeridentität in einem Mobilfunknetzwerk identifizierbar ist, wobei das Ladestationssystem (200) einen Server (202) für die Auswahl eines Energieanschlusses (A, B, C) zur Bereitstellung elektrischer Energie und eine Ladestation (100) aufweist, die ausgebildet ist, elektrische Energie für das elektrisch betriebene Fahrzeug bereitzustellen und wobei die Ladestation (100) mit der Mehrzahl der Energieanschlüsse (A, B, C) elektrisch verbindbar ist, wobei die Ladestation (100) einen elektrischen Anschluss (101) zum Bereitstellen der elektrischen Energie für das elektrisch betriebene Fahrzeug und eine Kommunikationsschnittstelle (102) aufweist, wobei die Ladestation (100) ein Teilnehmeridentitätsmodul mit einer weiteren Teilnehmeridentität zur Identifikation der Ladestation (100) in dem Mobilfunknetzwerk und damit zu deren Ansprechbarkeit durch eine andere Netzwerkentität umfasst, wobei das Teilnehmeridentitätsmodul der Ladestation (100) eine SIM oder eine eSIM umfasst und wobei die weitere Teilnehmeridentität der Ladestation (100) eine Mobilfunkteilnehmeridentifikation ist und eine International Mobile Subscriber Identity, kurz IMSI, oder eine elektronische Identität, eiD, umfasst, mit:
Empfangen der Teilnehmeridentität des Nutzers über die Kommunikationsschnittstelle (102) der Ladestation (100);
Übertragen der empfangenen Teilnehmeridentität und einer weiteren Teilnehmeridentität eines Teilnehmeridentitätsmoduls der Ladestation (100) an den Server (202) über das Mobilfunknetzwerk durch die Kommunikationsschnittstelle (102), wobei hierdurch dem Server (202) der Standort der Ladestation (100) bekannt ist;
Auswählen eines der Energieanschlüsse (A, B, C) in Abhängigkeit von der übertragenen Teilnehmeridentität des Nutzers durch den Server (202), entsprechend einer hierfür durch den Nutzer zu seiner Teilnehmeridentität hinterlegten Auswahl eines dieser Energieanschlüsse (A, B, C);
Identifizieren der Ladestation (100) durch die von ihr an den Server (202) übertragene weitere Teilnehmeridentität des Teilnehmeridentitätsmoduls der Ladestation (100);
Freischalten eines Verbindungspfads zwischen der Ladestation (100) und dem ausgewählten Energieanschluss (A, B, C) durch den Server (202), um über eine physische Leitung eine elektrische Verbindung zwischen dem ausgewählten Energieanschluss (A, B, C) und der Ladestation (100) zur Bereitstellung der elektrischen Energie herzustellen.

## Claims

1. Charging station system (200) for providing electrical energy for an electrically operated vehicle of a user in a smart grid (201), which has a plurality of energy connections (A, B, C), wherein each energy connection (A, B, C) is assigned to a different energy provider, wherein the user is identifiable by a subscriber identity in a mobile radio network, comprising:
a server (202) for the selection of an energy connection (A, B, C) for providing electrical energy,
a charging station (100) configured to provide electrical energy for the electrically operated vehicle, and wherein the charging station (100) is able to be electrically linked to the plurality of energy connections (A, B, C), wherein the charging station (100) has an electrical connection (101) for providing the electrical energy for the electrically operated vehicle, and a communication interface (102) configured to receive the user's subscriber identity and to transmit the received subscriber identity to the server (202) via the mobile radio network, and wherein the server (202) is configured, depending on the transmitted subscriber identity of the user, to select one of the energy connections (A, B, C) according to a selection of one of said energy connections (A, B, C), which selection is stored for this purpose by the user with respect to the latter's subscriber identity, and to enable a linking path between the charging station (100) and the selected energy connection (A, B, C) in order to establish an electrical link via a physical line between the selected energy connection (A, B, C) and the charging station (100) for providing the electrical energy,
**characterized in that** the charging station (100) comprises a subscriber identity module with a further subscriber identity for identifying the charging station (100) in the mobile radio network; and
wherein the subscriber identity module of the charging station (100) comprises a SIM or an eSIM; and
wherein the further subscriber identity of the charging station (100) is a mobile radio subscriber identification and comprises an international mobile subscriber identity, IMSI for short, or an electronic identity, eID, wherein the further subscriber identity of the charging station is identifiable in the mobile radio network and can thereby be recognized and addressed by some other network identity; and
wherein the communication interface (102) of the charging station (100) is configured to transmit the further subscriber identity of the charging station (100) to the server (202) in order to identify the charging station (100) vis-à-vis the server (202); and
wherein as a result of the transmission of the further subscriber identity of the charging station (100), the location of the charging station (100) is known to the server (202).

2. Charging station system (200) according to Claim 1, wherein the communication interface (102) comprises at least one of the following interfaces: NFC, Bluetooth, WLAN, 5G, LTE.

3. Charging station system (200) according to either of the preceding claims, wherein the user's subscriber identity comprises an IMSI or eID or eSIM.

4. Charging station system (200) according to any of the preceding claims, wherein the communication interface (102) of the charging station (100) is configured to query the user's subscriber identity from a mobile telephone of the user by means of near field communication if it is recognized that a connector has been inserted into the electrical connection (101) of the charging station (100).

5. Charging station system (200) according to any of the preceding claims, wherein the electrical connection (101) of the charging station (100) is configured to receive a connector according to EN 62196 type 2.

6. Charging station system (200) according to any of the preceding claims, wherein the charging station (100) has an indicator device configured to output a status signal in order to indicate a status of the charging station (100).

7. Charging station system (200) according to Claim 6, wherein the indicator device is designed to output the status signal if the server (202) has established the electrical link between the selection energy connection (A, B, C) and the charging station (100).

8. Charging station system (200) according to any of the preceding claims, wherein the server (202) is designed to emit an information signal if the energy connection (A, B, C) was selected, in order to indicate which energy connection (A, B, C) was selected, wherein the server (202) is designed to receive a confirmation signal confirming the selection before the link between the selected energy connection (A, B, C) and the charging station (100) is established.

9. Charging station system (200) according to any of the preceding claims, wherein the mobile radio network comprises an LTE standard or a 5G standard.

10. Method for providing electrical energy for an electrically operated vehicle of a user via a charging station system (200) with a smart grid (201), which has a plurality of energy connections (A, B, C), wherein each energy connection (A, B, C) is assigned to a different energy provider, wherein the user is identifiable by a subscriber identity in a mobile radio network, wherein the charging station system (200) has a server (202) for the selection of an energy connection (A, B, C) for providing electrical energy, and a charging station (100) configured to provide electrical energy for the electrically operated vehicle, and wherein the charging station (100) is able to be electrically linked to the plurality of energy connections (A, B, C), wherein the charging station (100) has an electrical connection (101) for providing the electrical energy for the electrically operated vehicle, and a communication interface (102), wherein the charging station (100) comprises a subscriber identity module with a further subscriber identity for identifying the charging station (100) in the mobile radio network and thereby for the addressability thereof by some other network entity, wherein the subscriber identity module of the charging station (100) comprises a SIM or an eSIM, and wherein the further subscriber identity of the charging station (100) is a mobile radio subscriber identification and comprises an international mobile subscriber identity, IMIS for short, or an electronic identity, eID, comprising:
receiving the user's subscriber identity via the communication interface (102) of the charging station (100);
transmitting the received subscriber identity and a further subscriber identity of a subscriber identity module of the charging station (100) to the server (202) via the mobile radio network by means of the communication interface (102), wherein the location of the charging station (100) is known to the server (202) as a result;
selecting one of the energy connections (A, B, C) depending on the transmitted subscriber identity of the user by means of the server (202), according to a selection of one of said energy connections (A, B, C) which selection is stored for this purpose by the user with respect to the latter's subscriber identity;
identifying the charging station (100) by means of the further subscriber identity of the subscriber identity module of the charging station (100) that the latter transmitted to the server (202);
enabling a linking path between the charging station (100) and the selected energy connection (A, B, C) by means of the server (202) in order to establish, via a physical line, an electrical link between the selected energy connection (A, B, C) and the charging station (100) for providing the electrical energy.

## Revendications

1. Système de station de recharge (200) permettant de fournir de l'énergie électrique pour un véhicule électrique d'un utilisateur dans un réseau électrique intelligent (201) qui présente une pluralité de bornes d'alimentation (A, B, C), chaque borne d'alimentation (A, B, C) étant associée à un fournisseur d'énergie différent, l'utilisateur étant identifiable par une identité d'abonné dans un réseau de téléphonie mobile, comprenant :
un serveur (202) pour sélectionner une borne d'alimentation (A, B, C) pour la fourniture d'énergie électrique,
une station de recharge (100) qui est réalisée pour fournir de l'énergie électrique pour le véhicule électrique, et dans lequel la station de recharge (100) peut être reliée électriquement à une pluralité des bornes d'alimentation (A, B, C), la station de recharge (100) présentant une borne électrique (101) pour la fourniture de l'énergie électrique pour le véhicule électrique et une interface de communication (102) qui est réalisée pour recevoir l'identité d'abonné de l'utilisateur et pour transmettre l'identité d'abonné reçue au serveur (202) par le réseau de téléphonie mobile,
et dans lequel le serveur (202) est réalisé pour sélectionner, en fonction de l'identité d'abonné transmise de l'utilisateur, l'une des bornes d'alimentation (A, B, C) selon une sélection d'une de ces bornes d'alimentation (A, B, C) mémorisée à cet effet par l'utilisateur avec son identité d'abonné, et pour libérer une voie de communication entre la station de recharge (100) et la borne d'alimentation (A, B, C) sélectionnée afin d'établir une liaison électrique par l'intermédiaire d'une ligne physique entre la borne d'alimentation (A, B, C) sélectionnée et la station de recharge (100) pour la fourniture de l'énergie électrique,
**caractérisé en ce que** la station de recharge (100) comprend un module d'identité d'abonné avec une autre identité d'abonné pour l'identification de la station de recharge (100) dans le réseau de téléphonie mobile ; et
dans lequel le module d'identité d'abonné de la station de recharge (100) comprend un SIM ou eSIM ; et
dans lequel une autre identité d'abonné de la station de recharge (100) est une identification d'abonné de téléphonie mobile et une identité internationale d'abonné mobile, abrégée en IMSI, ou une identité électronique, eID, dans lequel l'autre identité d'abonné de la station de recharge est identifiable dans le réseau de téléphonie mobile et peut donc être reconnue et adressée par une autre entité de réseau ; et
dans lequel l'interface de communication (102) de la station de recharge (100) est réalisée pour transmettre l'autre identité d'abonné de la station de recharge (100) au serveur (202) afin d'identifier la station de recharge (100) par rapport au serveur (202) ; et
dans lequel la transmission de l'autre identité d'abonné de la station de recharge (100) permet au serveur (202) de connaître l'emplacement de la station de recharge (100).

2. Système de station de recharge (200) selon la revendication 1, dans lequel l'interface de communication (102) comprend au moins l'une des interfaces suivantes : NFC, Bluetooth, WLAN, 5G, LTE.

3. Système de station de recharge (200) selon l'une quelconque des revendications précédentes, dans lequel l'identité d'abonné de l'utilisateur comprend une IMSI ou une eID ou un eSIM.

4. Système de station de recharge (200) selon l'une quelconque des revendications précédentes, dans lequel l'interface de communication (102) de la station de recharge (100) est réalisée pour demander l'identité d'abonné de l'utilisateur à un téléphone mobile de l'utilisateur au moyen d'une communication en champ proche s'il est reconnu qu'un connecteur est inséré dans la borne électrique (101) de la station de recharge (100).

5. Système de station de recharge (200) selon l'une quelconque des revendications précédentes, dans lequel la borne électrique (101) de la station de recharge (100) est réalisée pour recevoir un connecteur type 2 selon EN 62196.

6. Système de station de recharge (200) selon l'une quelconque des revendications précédentes, dans lequel la station de recharge (100) présente un dispositif d'indication qui est conçu pour émettre un signal d'état afin d'indiquer un état de la station de recharge (100).

7. Système de station de recharge (200) selon la revendication 6, dans lequel le dispositif d'indication est conçu pour émettre le signal d'état si le serveur (202) a établi la liaison électrique entre la borne d'alimentation (A, B, C) sélectionnée et la station de recharge (100).

8. Système de station de recharge (200) selon l'une quelconque des revendications précédentes, dans lequel le serveur (202) est conçu pour émettre un signal d'information si la borne d'alimentation (A, B, C) a été sélectionnée afin d'indiquer quelle borne d'alimentation (A, B, C) a été sélectionnée, dans lequel le serveur (202) est conçu pour recevoir avant l'établissement de la communication entre la borne d'alimentation (A, B, C) sélectionnée et la station de recharge (100) un signal de confirmation qui confirme la sélection.

9. Système de station de recharge (200) selon l'une quelconque des revendications précédentes, dans lequel le réseau de téléphonie mobile comprend une norme LTE ou une norme 5G.

10. Procédé permettant de fournir de l'énergie électrique pour un véhicule électrique d'un utilisateur par l'intermédiaire d'un système de station de recharge (200) avec un réseau électrique intelligent (201) qui présente une pluralité de bornes d'alimentation (A, B, C), chaque borne d'alimentation (A, B, C) étant associée à un fournisseur d'énergie différent, l'utilisateur étant identifiable par une identité d'abonné dans un réseau de téléphonie mobile, dans lequel le système de station de recharge (200) présente un serveur (202) pour sélectionner une borne d'alimentation (A, B, C) pour la fourniture d'énergie électrique et une station de recharge (100) qui est réalisée pour fournir de l'énergie électrique pour le véhicule électrique, et dans lequel la station de recharge (100) peut être reliée électriquement à la pluralité des bornes d'alimentation (A, B, C), dans lequel la station de recharge (100) présente une borne électrique (101) pour la fourniture de l'énergie électrique pour le véhicule électrique et une interface de communication (102), dans lequel la station de recharge (100) comprend un module d'identité d'abonné avec une autre identité d'abonné pour l'identification de la station de recharge (100) dans le réseau de téléphonie mobile et donc pour lui permettre d'être adressée par une autre entité de réseau, dans lequel le module d'identité d'abonné de la station de recharge (100) comprend un SIM ou un eSIM, et dans lequel l'autre identité d'abonné de la station de recharge (100) est une identification d'abonné de téléphonie mobile et une identité internationale d'abonné mobile, abrégée en IMSI, ou une identité électronique, eID, comprenant les étapes consistant à :
recevoir l'identité d'abonné de l'utilisateur à travers l'interface de communication (102) de la station de recharge (100) ;
transmettre l'identité d'abonné reçue et une autre identité d'abonné d'un module d'identité d'abonné de la station de recharge (100) au serveur (202) par le réseau de téléphonie mobile à travers l'interface de communication (102), le serveur (202) connaissant ainsi l'emplacement de la station de recharge (100) ;
sélectionner l'une des bornes d'alimentation (A, B, C) en fonction de l'identité d'abonné transmise de l'utilisateur par le serveur (202) selon une sélection d'une de ces bornes d'alimentation (A, B, C) mémorisée à cet effet par l'utilisateur avec son identité d'abonné ;
identifier la station de recharge (100) par l'autre identité d'abonné du module d'identité d'abonné de la station de recharge (100), transmise par celle-ci au serveur (202) ;
libérer une voie de communication entre la station de recharge (100) et la borne d'alimentation (A, B, C) sélectionnée par le serveur (202) afin d'établir par l'intermédiaire d'une ligne physique une liaison électrique entre la borne d'alimentation (A, B, C) sélectionnée et la station de recharge (100) pour la fourniture de l'énergie électrique.
